# EUROPÄISCHE PATENTSCHRIFT

(11) **EP 1 754 051 B1**
(45) Veröffentlichungstag und Bekanntmachung des Hinweises auf die Patenterteilung: **20.01.2016**
(21) Anmeldenummer: 05756264.7
(22) Anmeldetag: 06.06.2005
(51) Int. Cl.: G01N 29/032

(54) **VERFAHREN ZUR KORREKTUR DES EINFLUSSES VON SIGNALÜBERTRAGUNGSLEITUNGEN AUF SIGNALLAUFZEITÄNDERUNGEN BEI ULTRASCHALLMESSUNGEN**
METHOD FOR CORRECTING THE INFLUENCE OF SIGNAL TRANSMISSION LINES ON CHANGES OF SIGNAL TRANSIT TIMES WHEN CONDUCTING ULTRASONIC MEASUREMENTS
PROCEDE POUR CORRIGER L'INFLUENCE DE LIGNES DE TRANSMISSION DE SIGNAUX SUR DES MODIFICATIONS DE TEMPS DE PROPAGATION DE SIGNAUX, LORS DE MESURES PAR ULTRASONS

(30) Priorität: 09.06.2004 DE 102004027919
(43) Veröffentlichungstag der Anmeldung: 21.02.2007
(73) Patentinhaber: AMG Intellifast GmbH, 66374 Speyer (DE)
(72) Erfinder: GRILL, Wolfgang, 04103 Leipzig (DE); KOCIORSKI, Reinhold, 67346 Speyer (DE)
(74) Vertreter: Hörschler, Wolfram Johannes
(86) Internationale Anmeldenummer: PCT/EP2005/006038
(87) Internationale Veröffentlichungsnummer: WO 2005/121773

(56) Entgegenhaltungen:
- EP-A- 0 441 145
- EP-A- 0 736 773
- US-A- 4 413 518
- US-A- 5 150 620
- US-A- 5 237 516

## Beschreibung

### Technisches Gebiet

Die Bestimmung der Spannkraft von Verbindungsbauteilen, wie zum Beispiel der Vorspannkraft von Schrauben oder Bolzen, kann über ein Ultraschallmessverfahren erfolgen, wozu im Allgemeinen ein Ultraschallmessgerät über eine Sigrialübertragungsleitung mit einem auf dem Verbindungsbauteil angebrachten Ultraschall-Transducer verbunden wird. Die Einkopplung der Ultraschallwellen in das zu überprüfende Verbindungsbauteil erfolgt zum Beispiel über eine gepulste Anregung. Nach Einkopplung des Ultraschallsignals in das zu überprüfende Bauteil wird die Signallaufzeit bestimmter Ultraschallpuls-Echos des zuvor in das Verbindungsbauteil eingekoppelten Ultraschallpulses gemessen. Die Veränderung der Signallaufzeit wird zur Bestimmung der Vorspannkraft herangezogen.

### Stand der Technik

Bei heute bereits angewendeten Verfahren wird im Allgemeinen ein Pulsgenerator, so zum Beispiel ein programmierbarer Arbiträr-Generator (arbitrary function generator), der ein Leistungsverstärkerteil aufweist, zur Erzeugung von digital steuerbaren Signalen eingesetzt. Zur Signalerfassung wird in der Regel ein Transientenrecorder einschließlich eines Leistungsverstärkers eingesetzt. Die weiteren Komponenten eines derartigen Ultraschallmesssystems sind ein Rechner, der neben der Steuerung auch zur Datenerfassung und zur Auswertung mit entsprechender Software versehen, eingesetzt wird.

Aus DE 42 24 035 A1 sowie DE 42 32 254 A1 ist ein Ultraschallprüfverfahren bekannt. Gemäß dieses Verfahrens ist zur Ansteuerung eines in einer Übertragungsstrecke angeordneten Ultraschallwandlers ein frequenzmoduliertes Chirp-Signal x(t) vorgesehen, dessen momentane Frequenz f nicht linear mit der Zeit t moduliert wird. Der zeitliche Verlauf f(t) der momentanen Frequenz f des frequenzmodulierten Chirp-Signals x(t) an die Übertragungsfunktion H(f) ist an die vorgegebene Übertragungsstrecke angepasst. Die zeitliche Änderung der momentanen Frequenz f des frequenzmodulierten Chirp-Signals x(t) ist derart mit dem zu dieser Frequenz f gehörenden Wert der Übertragungsfunktion H(f) der Übertragungsstrecke korreliert, dass bei Frequenzen f mit niedrigem zugehörigen Wert der Übertragungsfunktion H(f) die Geschwindigkeit der Frequenzänderung kleiner ist als bei Frequenzen f mit hohem zugehörigen Wert der Übertragungsfunktion H(f). Zur Ansteuerung des Ultraschallwandlers dient ein rechteckförmiges Chirp-Signal x'(t). Ferner wird eine Einrichtung zur Ultraschallprüfung mit einem Signalgenerator zur Ansteuerung eines Ultraschallwandlers mit einem frequenzmodulierten Chirp-Signal x(t) vorgeschlagen, dessen momentane Frequenz f nicht linear von der Zeit abhängt sowie ein Pulskompressionsfilter zum Umwandeln des von diesem oder einem anderen Ultraschallwandler empfangenen Chirp-Signals y(t) in einen kurzen Empfangsimpuls z(t).

*Aus* EP 0 441 145 A2 *ist ein lastanzeigendes Bauteil bekannt, welches einen Schaft mit mindestens einer Kerbe sowie einen Ultraschallwandler aufweist. Der Ultraschwallwandler ist dabei auf die mindestens eine Kerbe ausgerichtet. Die Last des Bauteils wird durch eine Messung der Laufzeit eines Ultraschallsignals, welches durch den Ultraschallwandler erzeugt und an einer Oberfläche des Bauteils reflektiert wird, ermittelt. Dabei kann eine Differenz von Laufzeiten von Signalen, die an verschiedenen Kerben reflektiert wurden gebildet werden, um die Messung unabhängig von der verwendeten Elektronik oder des Kabels zu machen.*

Nachteilig bei den bekannten Verfahren ist der Umstand, dass Änderungen in der beobachteten Laufzeit des Ultraschallpuls-Echos nicht nur durch die zu beobachtende Laufzeitänderung des Ultraschallsignals, sondern auch durch Änderungen der Laufzeit in den Signalübertragungsleitungen und im elektronischen Ultraschallmessgerät, hervorgerufen werden können. Neben den bekannten Einflüssen von Feuchtigkeit und Temperatur, können diese Änderungen auch durch ein Auswechseln des Messkabels oder das Auswechseln des elektronischen Messgerätes oder Teilen davon etwa durch bauartbedingte Unterschiede verursacht werden.

Die dadurch verursachten Laufzeitänderungen des Ultraschallpuls-Echos führen, wenn sie nicht berücksichtigt werden, zu Fehlern bei der Bestimmung der Laufzeit des Ultraschallpuls-Echos. Dies ist insbesondere dann von Nachteil, wenn geringe Änderungen, wie sie zum Beispiel durch langsames Setzen einer Schraubverbindung auftreten können, zuverlässig beobachtet werden sollen, oder wenn eine Schraub- oder Bolzenverbindung nach geraumer Zeit nochmals überprüft werden soll.

### Darstellung der Erfindung

Zur Ermittlung der Vorspannkraft von Verbindungsbauteilen, wie zum Beispiel Schrauben, wird die Ultraschall-Laufzeit eines Ultraschallsignals im unverschraubten Zustand der Schraube gemessen und anschließend in einem Rechner gespeichert. Diese dient als Referenzwert. Zur Ermittlung der Vorspannkraft wird der Laufzeitunterschied eines Ultraschallimpulses, der durch eine Schraube im verschraubten Zustand gesendet wurde, herangezogen. Aus dem Laufzeitunterschied der beiden Ultraschallsignale wird die Vorspannkraft der Schraube errechnet. Physikalisch gesehen wird nur die Ultraschall-Laufzeit eines Ultraschallsignals in der Schraube vermessen. Aus messtechnischer Sicht ist die Signallaufzeit innerhalb einer Signalübertragungsleitung und/oder eines mit dieser verbundenen Adapters sowie die Signallaufzeit innerhalb eines elektronischen Messgerätes zu berücksichtigen. Wird diese nicht korrigiert beziehungsweise berücksichtigt, besteht eine Einschränkung hinsichtlich einzusetzender Längen von Signalübertragungsleitungen sowie der Wahl des Anzugswerkzeuges oder des Adapters sowie hinsichtlich der Bauteiltoleranzen.

Das erfindungsgemäß vorgeschlagene Verfahren erlaubt die Integration der Messtechnik beim Endabnehmer, so dass dieser mit unterschiedlichen Kabellängen und Adaptern arbeiten kann, ohne einen logistischen Aufwand hinsichtlich der Kompensation der eingesetzten Messtechnik zu betreiben. Mit dem erfindungsgemäß vorgeschlagenen Verfahren können die tatsächlichen Ultraschall-Laufzeiten von Ultraschallsignalen in einem als Schraube ausgebildeten Verbindungsbauteil direkt gemessen werden, ohne dass störende Einflüsse das Messergebnis verfälschen.

Dem erfindungsgemäß vorgeschlagenen Verfahren zur Korrektur des Einflusses von Signalübertragungsleitungen auf Laufzeitänderungen von Ultraschallsignalen, etwa zur Messung von Spannkräften in Verbindungsbauteilen, wie Schrauben oder Bolzen, folgend wird zur Bestimmung der zur Zeit der Messung der Spannkraft vorliegenden Laufzeit des Kabels und der Laufzeiten im elektronischen Messgerät, der Reflexion eines elektrischen Anregungssignals an dem vom elektronischen Messgerät ausgehend fernen Ende des Kabels (an der Anschlussstelle für einen Ultraschall-Transducer) genutzt. An einem Ende einer Signalübertragungsleitung wird ein elektrisches Signal dann teilweise oder ganz, gegebenenfalls mit Vorzeichenumkehr reflektiert, wenn die Impedanz der an diesem Kabelende angeschlossenen Komponente von der Impedanz des Kabels abweicht. Unter Impedanz der am Kabelende angeschlossenen Komponente wird auch die Impedanz am Kabelende verstanden, wenn dort keine Komponente angeschlossen ist und es sich mithin um ein offenes Kabelende handelt. Die Impedanz des Kabels an sich liegt in Bezug auf Koaxialkabel typischerweise im Bereich zwischen 50 Ohm bis 75 Ohm. Durch die zeitaufgelöste Erfassung des reflektierten elektrischen Signals (zum Beispiel Puls), was beispielsweise mit Hilfe eines Transientenrekorders erfolgen kann, wird bezüglich des Nullpunktes der mit der Pulserzeugung synchronisierten (z.B. synchron zur Anregung getriggert) bei der zeitaufgelösten Messung benutzten Zeitbasis, die entsprechend auch zur Beobachtung der Ultraschallsignale genutzt wird, die Laufzeit des am oben definierten Kabelende reflektierten elektrischen Signals in Signalübertragungsleitung und/oder im elektronischen Messgerät einschließlich einer möglichen Abweichung vom Nullpunkt der genutzten Zeitbasis vom Zeitpunkt des Anregungssignals bestimmt. Durch die Erfassung des entsprechenden Signals, was beispielsweise auf elektronischem Wege erfolgen kann, und die Bestimmung der Laufzeit des am Kabelende reflektierten Signals wird die momentane Laufzeit bis zu dem an dieser Stelle direkt anschließbaren oder kurz zuvor oder kurz danach anschließbaren Transducer bestimmt. Bei dieser Stelle handelt es sich um das Ende der Signalübertragungsleitung mit einem Adapter. Im Adapter wird über einen Messstift, der auf den Transducer aufgesetzt wird, das Ultraschallsignal übertragen. Bei der Feststellung der Laufzeit des elektrischen Signals darf der Messstift jedoch noch keinen Kontakt zum Transducer haben, der in der Regel auf der Oberseite der zu vermessenden Schraube oder eines ähnlichen Verbindungsbauteils aufgebracht ist. Die Feststellung der Laufzeit des elektrischen Signals kann beispielsweise auf einfachste Art erfolgen, wenn ein Messstift beim Wechsel der Messstelle keinen Kontakt zum Ultraschall-Transducer hat. Bei der zumeist vorhandenen erheblichen Fehlanpassung des Transducers kann die Messung auch mit dem wegen der Fehlanpassung am Kontakthalter teilweise reflektierten elektronischen Signal durchgeführt werden. Die aus der Kabelreflexion ermittelte Laufzeit beinhaltet sowohl den Einfluss des elektronischen Messgerätes, als auch den Einfluss der Signalübertragungsleitung, wie beispielsweise eines Koaxialkabels, an sich. Die ermittelte Signallaufzeit beinhaltet in Form einer Summe beide Laufzeiten, sowohl den Einfluss des elektronischen Ultraschallmessgerätes, als auch den des Kabels. Die Laufzeit der Kabelreflexion wird bei der Bestimmung der Laufzeit des Ultraschallpuls-Echos von dessen Laufzeit subtrahiert, so dass die Laufzeit des Ultraschallpuls-Echos allein, ohne störende Einflussgrößen, die von schwankenden oder veränderten Geräte- und Kabellaufzeiten herrührt, ermittelbar ist. Zudem werden Abweichungen des Nullpunktes der bei der Messung genutzten Zeitbasis vom Zeitpunkt des Anregungssignals (zum Beispiel bezogen auf dessen Anfang) durch die Subtraktion korrigiert.

Damit sich bei der Detektion innerhalb des elektronischen Ultraschallmessgerätes bei der Messung das Ultraschallpulssignal (Anregungssignal) und das Ultraschallpuls-Echo (Detektionssignal) nicht überlagern, können entweder ein Zirkulator oder ein handelsübliches Reflektometer eingesetzt werden. Alternativ kann abhängig vom genutzten Frequenzbereich des Ultraschallsignals eine Signalübertragungsleitung von zumindest hinreichender Länge eingesetzt werden. Für einen kurzen Ultraschallpuls mit einer Mittenfrequenz von etwa 1 MHZ wäre dies zumindest die etwa der Pulsbreite (1 *µ*s) entsprechende Laufzeit und damit, da eine Messung der Reflexion durchgeführt wird, ein Kabel mit einer Durchlaufzeit in eine Richtung von 0,5 *µ*s. Die Länge der Signalübertragungsleitung ist dann gerade als hinreichend anzusehen, wenn der Laufweg für einen Durchlauf in der Signalübertragungsleitung (d.h. im Verbindungskabel vom elektronischen Messgerät zum Ultraschall-Transducer) gerade der halben Dauer des Anregungssignals entspricht, da die Signalübertragungsleitung bei den Messungen mit Reflexion zwei mal durchlaufen wird.

### Zeichnung

Anhand der Zeichnung wird das erfindungsgemäß vorgeschlagene Verfahren nachgehend eingehender beschrieben.

Die einzige Figur zeigt eine Vorrichtung zur Durchführung des erfindungsgemäß vorgeschlagenen Verfahrens zur Korrektur des Einflusses von Signalübertragungsleitungen auf die Bestimmung von Laufzeitänderungen bei Einkopplung von Ultraschallsignalen in ein Verbindungsbauteil, wie beispielsweise eine Schraube.

### Ausführungsvarianten

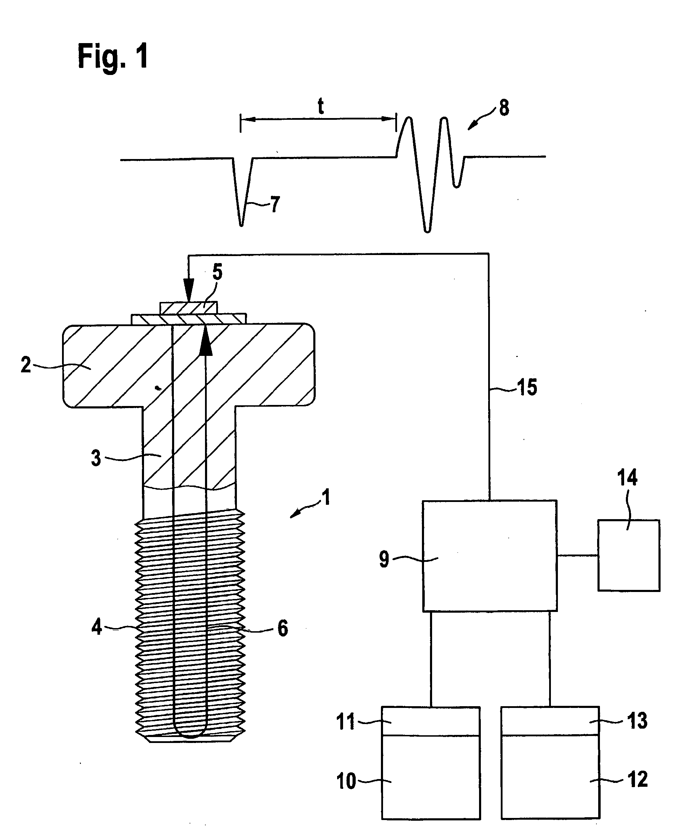

Der Darstellung gemäß Figur 1 sind in schematisch wiedergegebener Weise die Komponenten eines Ultraschallmesssystems zur Erfassung der Signallaufzeit eines Ultraschallpulses durch ein als Schraube ausgebildetes Verbindungsbauteil zu entnehmen.

Nachfolgend wird ein Ultraschallmessverfahren zur Messung der Vorspannkraft eines als Schraube ausgebildeten Verbindungsbauteils beschrieben. Unter Vorspannkraft der Schraube wird die Kraft verstanden, mit der die Schraube Verbindungsbauteile miteinander verbindet.

Ein Verbindungsbauteil ist in der Darstellung gemäß Figur 1 als Schraube ausgebildet. Das Verbindungsbauteil 1 umfasst einen Schraubenkopf 2 und einen Schaft 3. Unterhalb des Schaftes 3 erstreckt sich ein Gewindeteil 4, welches in ein dazu komplementäres Gewinde eines Bauteils eingeschraubt oder mit einer Schraubenmutter verschraubt sein kann. Oberhalb des Schraubenkopfes 2 befindet sich ein Ultraschall-Transducer 5 für einen in das Verbindungsbauteil 1 einzukoppelnden Ultraschallpuls 7, auch als Transducer bezeichnet. Der am Ultraschall-Transducer 5 in das Verbindungsbauteil 1 eingekoppelte Ultraschallpuls 7 verläuft entlang eines Laufweges 6 durch das Verbindungsbauteil 1 und tritt an dem Ultraschall-Transducer 5 für den Ultraschallpuls 7 wieder aus dem Verbindungsbauteil 1 als elektrisches Ultraschallpuls-Echo 8 aus. Mit t ist die Zeit bezeichnet, die zwischen dem Eintritt des Ultraschallpulses 7 in das Verbindungsbauteil 1 und dem Austreten des Ultraschallpuls-Echos 8 aus dem Verbindungsbauteil 1 vergeht, d.h. die Laufzeit des Ultraschallsignals.

Zur Einkopplung des Ultraschallpulses 7 und zur Auskopplung des elektrischen Ultraschallpuls-Echos 8 in das beziehungsweise aus dem Verbindungsbauteil 1 erstreckt sich eine Signalübertragungsleitung 15, die als Koaxialkabel beschaffen sein kann, mit einer der Signalübertragungsleitung 15 innewohnenden Impedanz zwischen dem Ultraschall-Transducer 5 und einem Ultraschallmessgerät 9. Das Ultraschallmessgerät 9 ist mit einem Rechner 14, bei dem es sich beispielsweise um einen PC handeln kann, verbunden. Ferner steht das Ultraschallmessgerät 9 mit einem Pulsgenerator 10 (arbitrary function generator, Arbiträr-Generator) in Verbindung, der einen 1. Leistungsverstärker 11 aufweisen kann. Durch den Pulsgenerator 10 mit 1. Leistungsverstärker 11 werden die Ultraschallpulse 7 unter Zwischenschaltung eines Ultraschall-Transducers 5 erzeugt. Zur Signalerfassung des Ultraschall-Transducers 5 aus dem Verbindungsbauteil 1 ausgekoppelten elektrischen Ultraschallpuls-Echos 8 dient ein Transientenrekorder 12, der einen Leistungsverstärker 13 umfassen kann.

Der Vollständigkeit halber sei erwähnt, dass auf dem Rechner 14, bei *dem* es sich um einen PC handeln kann, eine Software implementiert ist, die zur Datenerfassung und Datenauswertung und zur Steuerung beispielsweise der *Repetitionsrate* der Ultraschallsignale eingesetzt werden kann.

Zur Bestimmung der zur Zeit der Messung der Spannkraft vorliegenden Laufzeit der Signalübertragungsleitung 15 und der Laufzeiten der Ultraschallsignale durch das elektronische Messgerät 9 wird die Reflexion eines elektrischen Anregungssignals am Ende (beim Ultraschall-Transducer 5) der Signalübertragungsleitung 15 genutzt. Dieses wird an einem Kabelende immer dann teilweise oder ganz und gegebenenfalls mit Vorzeichenumkehr reflektiert, wenn die Impedanz der am Kabelende der Signalübertragungsleitung 15 angeschlossenen Komponente (z.B. Ultraschall-Transducer 5) von der Impedanz der Signalübertragungsleitung 15 an sich abweicht. Es sei nochmals darauf hingewiesen, dass unter Impedanz der am Kabelende der Signalübertragungsleitung 15 angeschlossenen Komponente auch ein offenes Kabelende, d.h. das Fehlen einer angeschlossenen Komponente verstanden wird. Durch die Erfassung des elektrischen Signals und die Bestimmung der Laufzeit des am Ende der Signalübertragungsleitung 15 reflektierten Signals wird die Laufzeit bis zu einem an dieser Stelle direkt (ohne wesentliche weitere Laufzeit) anschließbaren oder kurz davor oder kurz dahinter anschließbaren Ultraschall-Transducer 5 bestimmt.

Die aus der Reflexion des elektrischen Signals innerhalb der Signalübertragungsleitung 15 ermittelte Laufzeit beinhaltet sowohl den Einfluss des elektronischen Ultraschallmessgerätes 9 auf die Laufzeit, als auch den Einfluss der Signalübertragungsleitung 15 auf die Laufzeit des elektrischen Signals. Die Laufzeit der Reflexion des elektrischen Signals innerhalb der Signalübertragungsleitung 15 wird bei der Bestimmung der Signallaufzeit des elektrischen Ultraschallpuls-Echos 8 von der diesem entsprechenden Laufzeit subtrahiert, so dass die Laufzeit des Ultraschallsignals durch das Verbindungsbauteil 1 allein ohne störenden Einfluss von schwankenden oder veränderten Laufzeiten der elektrischen Signale im Ultraschallmessgerät 9 und/oder in der Signalübertragungsleitung 15 vorliegt.

Zur Verhinderung einer sich bei der Detektion im elektronischen Ultraschallmessgerät einstellenden Überlagerung des Ultraschallpulses 7 (Anregungssignal) und des Ultraschallpuls-Echos 8 (Detektionssignal) können ein Zirkulator oder ein handelsübliches Reflektometer oder ein elektronisch oder elektrisch betätigbarer Schalter, wobei der elektronische Schalter insbesondere als Halbleiterbauelement ausgebildet sein kann, eingesetzt werden.

Alternativ kann abhängig vom benutzten Frequenzbereich eine Signalübertragungsleitung 15 von zumindest hinreichend geeigneter Länge eingesetzt werden. Eine zumindest hinreichende Länge der Signalübertragungsleitung 15 ist bei der Nutzung einer gepulsten Anregung bereits dann gegeben, wenn das Doppelte der einfachen Laufzeit, d.h. der Laufzeit für einen Hin- und Rücklauf des Signals in der Signalübertragungsleitung 15 der Pulsdauer entspricht, da in diesem Falle keine zeitliche Überlappung der gepulsten Anregung mit dem Signal aus der Reflexion am Kabelende oder am Verbinder zum Ultraschall-Transducer 5 vorliegen kann. Damit sich bei der Detektion im elektronischen Ultraschallmessgerät 9 bei der Messung das Anregungs- und Detektionssignal nicht überlagern, können entweder ein an sich bekannter Zirkulator oder ein an sich bekanntes Reflektometer eingesetzt werden. Alternativ kann abhängig vom benutzten Frequenzbereich des Ultraschallsignals eine Signalübertragungsleitung 15 von zumindest hinreichend geeigneter Länge mit einer - in eine Richtung gesehen - Durchlaufzeit von 0,5 *µ*s genutzt werden. Dabei wird zum Beispiel ein Ultraschallimpuls um eine Mittenfrequenz von 1 MHZ und eine etwa der Pulsbreite (1 *µ*s) entsprechende Laufzeit unterstellt. Da in Reflexion gemessen wird, kann eine Signalübertragungsleitung 15 mit einer einfachen Durchlaufzeit von 0,5 *µ*s genutzt werden. Bei von 1 MHZ verschiedenen Mittenfrequenzen stellen sich naturgemäß andere Durchlaufzeiten in der Signalübertragungsleitung 15 ein. Der Einsatz einer Signalübertragungsleitung 15 hat sich im Vergleich zu einem Zirkulator oder einem Reflektometer als vorteilhafter erwiesen, da es billiger ist und sich hinsichtlich seiner Funktionalität vorteilhaft vom Zirkulator oder Reflektometer abhebt.

Es ist weiterhin möglich, die Laufzeit oder die Phase des elektrischen Signals beziehungsweise des Ultraschallsignals in der Signalübertragungsleitung 15 allein oder mit angeschlossenem elektronischem Ultraschallmessgerät 9 frequenzabhängig zu bestimmen. Damit sich bei der Detektion im elektronischen Ultraschallmessgerät 9 bei der Messung das Anregungs- und Detektionssignal nicht überlagern, können entweder ein an sich bekannter Zirkulator oder ein an sich bekanntes Reflektometer eingesetzt werden. Auch in diesem Falle kann abhängig vom benutzten Frequenzbereich eine Signalübertragungsleitung 15 von zumindest hinreichend geeigneter Länge eingesetzt werden. Wird ein kurzer Puls um eine Mittenfrequenz von 1 MHZ unterstellt, ergäbe sich zumindest die etwa der Pulsbreite (etwa 1 *µ*s) entsprechende Laufzeit und demzufolge, da in Reflexion gemessen wird, ein Kabel mit einer einfachen Durchlaufzeit, d.h. Durchlauf des elektrischen Signals in eine Richtung von etwa 0,5 *µ*s. Bevorzugt wird eine Signalübertragungsleitung 15 eingesetzt, die im Allgemeinen vorteilhafter als ein Zirkulator oder ein Reflektometer ist.

Daneben lässt sich auch die Laufzeit oder die Phase sowie die Dämpfung von der Signalübertragungsleitung 15 allein oder mit an dieser angeschlossenem elektronischem Ultraschallmessgerät 9 frequenzabhängig bestimmen. Zur Bestimmung der Dämpfung und des Phasenganges bei der Übermittlung von Signalen wird im Allgemeinen auf Verfahren zurückgegriffen, die auf Fourier-Transformation FFT beziehungsweise Fourier-Analyse fußen. Dazu wird ein Intervall des übertragenen Signals beziehungsweise der Signalantwort, in dem sich bei gepulster Anregung das Antwortsignal bezüglich der Anregung befindet, digitalisiert. Mit Methoden der Fast-Fourier-Transformation (FFT) wird das Signal beziehungsweise die Signalantwort digital, spektral nach Frequenzen analysiert, wobei als Ergebnis die Frequenzabhängigkeit von Amplitude und Phase wiedergegeben wird. Dieses Ergebnis kann auch als digitale Information weiter genutzt werden und die Basis weiterer Auswertungen darstellen.

Ferner ist von Bedeutung, dass die Fouriertransformierte einer Dirac-Funktion (Deltapuls) ein Spektrum darstellt, welches über alle Frequenzen eine gleichbleibende Amplitude aufweist (auch als "weißes Spektrum" bezeichnet). Bei der Dirac-Funktion handelt es sich um einen infinitesimal kurzen Puls mit einer auf "1" normierten Fläche. Ist die Dirac-Funktion an der zeitlichen Stelle "0" positioniert, so sind für eine Darstellung der Frequenzanteile als Cosinus-Funktionen die Phasen aller spektralen Komponenten Null.

Umgekehrt ergibt sich bei einem Spektrum mit gleichbleibender Amplitude und einer Phase 0 zeitlich eine Antwort in Form einer Dirac-Funktion, wobei der Puls zeitlich bei 0 positioniert ist. Werden nur eingeschränkte Bandbreiten genutzt, ergibt sich ein verbreiteter Puls an der Stelle der Dirac-Funktion, dessen Breite typisch durch das Inverse der Bandbreite gegeben ist. So ergeben sich bei einer Bandbreite von 1 Hz zum Beispiel eine typische Pulsbreite von 1 Sekunde, bei 1 kHz ergibt sich 1 ms, bei 1 MHz dementsprechend eine *µ*s usw.

### Bezugszeichenliste

- 1: Verbindungsbauteil
- 2: Schraubenkopf
- 3: Schaft
- 4: Gewindeteil
- 5: Ultraschall-Transducer
- 6: Schallpfad
- 7: Ultraschallpuls

- t: Laufzeit Ultraschallsignal zwischen Einkopplung und Auskopplung aus Verbindungsbauteil

- 8: Ultraschallpuls-Echo
- 9: elektronisches Ultraschallmessgerät
- 10: Pulsgenerator (Arbiträr-Signalgenerator)
- 11: Leistungsverstärker
- 12: Transientenrecorder
- 13: Vorverstärker
- 14: Rechner
- 15: Signalübertragungsleitung

## Patentansprüche

1. Verfahren zur Korrektur des Einflusses von Signalübertragungsleitungen (15) und elektronischen Messgeräten (9) auf Änderungen von Laufzeiten t von Ultraschallpulsen (7) bei Vorspannkraftmessungen oder Spannkraftmessungen an einem Verbindungsbauteil (1) durch Ultraschallwellen wobei zur Bestimmung parasitärer Laufzeitanteile, die durch das elektronische Messgerät (9) und/oder die Signalübertragungsleitung (15) verursacht werden, die Laufzeit eines an einem messgerät-fernen Ende der Signalübertragungsleitung (15) reflektierten elektrischen Signals erfasst wird und zur Korrektur beobachteter Ultraschalllaufzeiten durch das Verbindungsbauteil (1) genutzt wird, wobei das Verbindungsbauteil (1) am messgerätfernen Ende der Signalübertragungsleitung (15) über einen Ultraschall-Transducer (5) angeschlossen ist, **dadurch gekennzeichnet, dass** aus der erfassten Laufzeit des elektrischen Signals in der Signalübertragungsleitung (15) und der beobachteten Laufzeit, die sich nach der Erzeugung des elektrischen Signals zusammensetzt aus Durchlaufzeiten durch elektronische Komponenten, Durchlaufzeiten in der Signalübertragungsleitung (15), Durchlaufzeiten t des Schallpfades (6) nach der Wandlung eines elektrischen in ein akustisches Signal bis zur Rückwandlung des akustischen Signals in ein elektrisches Signal, Rücklaufzeiten durch die Signalübertragungsleitung (15) und durch die elektronischen Komponenten bis zur Digitalisierung in einem Transientenrekorder (12), eine Differenz gebildet wird und bei der Differenzbildung Abweichungen des Nullpunktes der bei der Messung genutzten Zeitbasis vom Zeitpunkt des Anregungssignals korrigiert werden, um den Nullpunkt mit der genutzten Zeitbasis zu synchronisieren, wobei zur Kalibrierung und/oder Nachstellung oder Korrektur einer Zeitablaufsteuerung im elektronischen Messgerät (9) und/oder im Transientenrekorder (12) ein definiertes Laufzeitglied mit bekannter Laufzeit temporär manuell oder über elektrisch oder elektronisch betätigbare Schalter am Ende der Signalübertragungsleitung (15) angeschlossen wird oder am beziehungsweise im elektronischen Messgerät (9) vor die Signalübertragungsleitung (15) oder zwischen Teile der Signalübertragungsleitung (15) manuell, elektrisch oder elektronisch schaltbar eingefügt wird, wobei das definierte Laufzeitglied insbesondere eine definierte Signalübertragungsleitung mit bekannter Laufzeit ist.

2. Verfahren gemäß Anspruch 1 **dadurch gekennzeichnet, dass** die Frequenzabhängigkeit des Signals für den Reflex vom Ende der Signalübertragungsleitung (15) gemessenen Laufzeit über die mittels einer Fast-Fourier-Transformation ermittelten Phasengänge bestimmt wird und bei dem bei mindestens einem Fourier-Transformierten gemessenen Ultraschallsignal eine Korrektur des Phasenganges durch Differenzbildung erfolgt, wonach gegebenenfalls eine Rücktransformation durchführbar ist.

3. Verfahren gemäß Anspruch 1 **dadurch gekennzeichnet, dass** die Frequenzabhängigkeit der beobachteten Amplituden für das vom messgerät-fernen Ende der Signalübertragungsleitung (15) reflektierten Signals mittels der Fast-Fourier-Transformation bestimmt wird und unter Bezug auf die Fourier-Transformierte des Sendesignals, das digital vorgegeben ist, eine frequenzabhängige Abschwächung oder Verstärkung für das Reflexsignal vom Ende der Signalübertragungsleitung (15) bestimmt wird, welche zur Korrektur der Frequenzabhängigkeit der Amplituden durch Normierung bei wenigstens einem der beobachteten, fourier-transformierten Ultraschallsignale genutzt wird, wonach für das jeweilige korrigierte Ultraschallsignal eine Rücktransformation durchführbar ist.

4. Verfahren gemäß der Ansprüche 2 und 3 **dadurch gekennzeichnet, dass** die Verfahrensschritte gemäß des Anspruches 2 und des Anspruches 3 gemeinsam angewendet werden.

5. Verfahren gemäß der vorhergehenden Ansprüche **dadurch gekennzeichnet, dass** aus der Größe und/oder der Form des am Ende der Signalübertragungsleitung (15) reflektierten elektrischen Signals auf einen angeschlossenen Ultraschall-Transducer (5) geschlossen wird und bei nicht angeschlossenem Ultraschall-Transducer (5) eine Laufzeitmessung oder eine frequenzabhängige Phasenmessung und/oder eine frequenzabhängige Amplitudenmessung der elektrischen Signale für die Reflexion am messgerät-fernen Ende der Signalübertragungsleitung (15) durchgeführt wird.

6. Verfahren gemäß der vorhergehenden Ansprüche **dadurch gekennzeichnet, dass** am messgerät-fernen Ende der Signalübertragungsleitung (15) ein manuell oder elektrisch oder elektronisch gesteuerter Schalter anschließbar ist, mit welchem der Ultraschall-Transducer (5) abkoppelbar und ein hochohmiger Anschluss (offenes Ende) oder ein niederohmiger Anschluss (kurzgeschlossenes Ende) oder ein Anschluss mit einer definierten Impedanz erzeugbar ist.

7. Verfahren gemäß der Ansprüche 1 bis 4, **dadurch gekennzeichnet, dass** am messgerät-fernen Ende der Signalübertragungsleitung (15) einstellbare Impedanzen durch manuell, elektrisch oder elektronisch steuerbare Widerstände oder durch elektronisch steuerbare integrierte Halbleiterbauelemente erzeugt werden.

8. Verfahren gemäß einem oder mehrerer der vorhergehenden Ansprüche, **dadurch gekennzeichnet, dass** zur Signalerzeugung am Arbiträrsignalgenerator (10) ein Signal verwendet wird, welches zwei unterschiedliche, zur Vermeidung von Signalüberlagerungen hinreichend lange unterbrochene, aufeinander folgende Signale oder Signalanteile umfasst, von denen eines für die Bestimmung der Laufzeiten in der Signalübertragungsleitung (15) und im elektronischen Messgerät (9) schwächer und/oder kürzer gewählt ist und das andere zur Bestimmung der Laufzeit des elektrischen Ultraschallpuls-Echos (8) für den Schallpfad (6) in der Signalübertragungsleitung (15) und im elektronischen Messgerät (9) mit größerer Amplitude und/oder länger andauernd ausgewählt ist.

9. Vorrichtung zur Durchführung des Verfahrens gemäß einem oder mehrerer der Ansprüche 1 bis 8 umfassend ein elektronisches Ultraschallmessgerät (9), eine Signalerzeugungseinrichtung, eine Signalerfassungseinrichtung, einen Rechner (14), eine Signalübertragungsleitung (15), wobei das Ultraschallmessgerät (9) über die Signalübertragungsleitung (15) mit einem einen Ultraschall-Transducer (5) aufweisenden Verbindungsbauteil (1) in Verbindung steht und wobei der Rechner (14) zur Durchführung des Verfahrens gemäß einem oder mehrerer der Ansprüche 1 bis 8 eingerichtet ist, **dadurch gekennzeichnet, dass** ein Teil der Signalübertragungsleitung (15) entweder auswechselbar zwischen dem elektronischen Ultraschallmessgerät (9) und dem Ultraschall-Transducer (5) oder fest installiert zwischen diesen verläuft, wobei die Signalerzeugung mit einem Arbiträrsignalgenerator (10) und die Signaldetektion mit einem digitalisierenden Transientenrekorder (12) erfolgt und anstelle eines Teils der Signalübertragungsleitung (15) im elektronischen Ultraschallmessgerät (9) ein analog arbeitendes manuell, elektrisch oder elektronisch schaltbares Laufzeitglied mit bekannter Laufzeit enthalten ist.

## Claims

1. Method for correcting the influence of signal transmission lines (15) and electronic measuring devices (9) on changes in propagation times t of ultrasound pulses (7) during prestressing force measurements or stressing force measurements on a connecting component (1) using ultrasound waves, in which, in order to determine parasitic propagation time components caused by the electronic measuring device (9) and/or the signal transmission line (15), the propagation time of an electrical signal which is reflected at an end of the signal transmission line (15) which is remote from the measuring device is detected and is used to correct observed ultrasound propagation times through the connecting component (1), the connecting component (1) being connected to that end of the signal transmission line (15) which is remote from the measuring device via an ultrasound transducer (5), **characterized in that** a difference is formed from the detected propagation time of the electrical signal in the signal transmission line (15) and from the observed propagation time which, after the electrical signal has been generated, is composed of transit times through electronic components, transit times in the signal transmission line (15), transit times t of the sound path (6) after an electrical signal has been converted into an acoustic signal until the acoustic signal is converted back into an electrical signal, return times through the signal transmission line (15) and through the electronic components until digitization in a transient recorder (12), and when the difference is formed, deviations of the zero point of the time base used during the measurement from the time of the excitation signal are corrected in order to synchronize the zero point with the time base used, wherein in order to calibrate and/or adjust or correct a timing controller in the electronic measuring device (9) and/or in the transient recorder (12), a defined propagation time element having a known propagation time is temporarily connected to the end of the signal transmission line (15) manually or by means of electrically or electronically actuable switches or is fitted on or in the electronic measuring device (9) upstream of the signal transmission line (15) or between parts of the signal transmission line (15) in such a manner that it can be switched manually, electrically or electronically, wherein the defined propagation time element is in particular a defined signal transmission line having a known propagation time.

2. Method according to Claim 1, **characterized in that** the frequency dependence of the signal propagation time measured for reflection from the end of the signal transmission line (15) is determined using the phase responses which are determined using a fast Fourier transformation, and the phase response of the ultrasound signal measured in at least one Fourier transform is corrected by forming a difference, after which it is possible to carry out back-transformation if necessary.

3. Method according to Claim 1, **characterized in that** the frequency dependence of the observed amplitudes of the signal which is reflected from that end of the signal transmission line (15) which is remote from the measuring device is determined using fast Fourier transformation, and frequency-dependent attenuation or amplification of the signal that is reflected from the end of the signal transmission line (15), which is used to correct the frequency dependence of the amplitudes of at least one of the observed ultrasound signals, which have been subjected to Fourier transformation, by means of standardization, is determined with reference to the Fourier transform of the transmission signal which is digitally prescribed, after which back-transformation can be carried out for the respective corrected ultrasound signal.

4. Method according to Claims 2 and 3, **characterized in that** Method steps according to Claims 2 and 3 are used together.

5. Method according to one of the preceding claims, **characterized in that** the size and/or shape of the electrical signal reflected at the end of the signal transmission line (15) is/are used to infer that an ultrasound transducer (5) is connected, and, when an ultrasound transducer (5) is not connected, a propagation time measurement or a frequency-dependent phase measurement and/or a frequency-dependent amplitude measurement of the electrical signals is/are carried out for reflection at that end of the signal transmission line (15) which is remote from the measuring device.

6. Method according to one of the preceding claims, **characterized in that** a manually or electrically or electronically controlled switch can be connected to that end of the signal transmission line (15) which is remote from the measuring device, said switch being able to be used to decouple the ultrasound transducer (5) and to produce a high-impedance connection (open end) or a low-impedance connection (short-circuited end) or a connection having a defined impedance.

7. Method according to one of Claims 1 to 4, **characterized in that** adjustable impedances are produced at that end of the signal transmission line (15) which is remote from the measuring device using manually, electrically or electronically controllable resistors using electronically controllable integrated semiconductor components.

8. Method according to one or more of the preceding claims, **characterized in that**, in order to generate a signal in the arbitrary signal generator (10), use is made of a signal comprising two different successive signals or signal components which are interrupted for a sufficiently long period of time in order to avoid signal superimposition, one of which is selected to be weaker and/or shorter in order to determine the propagation times in the signal transmission line (15) and in the electronic measuring device (9) and the other of which is selected to have a larger amplitude and/or to last longer in order to determine the propagation time of the electrical ultrasound pulse echo (8) for the sound path (6) in the signal transmission line (15) and in the electronic measuring device (9).

9. Apparatus for carrying out Method according to one or more of Claims 1 to 8, said apparatus comprising an electronic ultrasound measuring device (9), a signal generating device, a signal detection device, a computer (14), a signal transmission line (15), wherein the ultrasound measuring device (9) is connected to a connecting component (1), which has an ultrasound transducer (5), via the signal transmission line (15) and wherein the computer (14) is set up to carry out the method according to one or more of Claims 1 to 8, **characterized in that** part of the signal transmission line (15) runs between the electronic ultrasound measuring device (9) and the ultrasound transducer (5) in such a manner that it can be replaced or runs between the latter in a permanently installed manner, signals being generated using an arbitrary signal generator (10) and signals being detected using a digitizing transient recorder (12) and, instead of part of the signal transmission line (15), the electronic ultrasound measuring device (9) containing an analogue manually, electrically or electronically switchable propagation time element having a known propagation time.

## Revendications

1. Procédé pour corriger l'influence de lignes de transmission de signaux (15) et d'appareils de mesure électroniques (9) sur des modifications de temps de propagation t d'impulsions d'ultrasons (7) lors de mesures de la force de précontrainte ou de mesures de force de serrage sur un composant de liaison (1) par des ondes ultrasonores, pour lequel pour déterminer les parties de temps de propagation parasitaires, qui sont causées par l'appareil de mesure électronique (9) et/ou la ligne de transmission de signaux (15), le temps de propagation d'un signal électrique réfléchi à une extrémité de la ligne de transmission de signaux (15), éloignée de l'appareil de mesure est saisi et est utilisé pour la correction des temps de propagation d'ultrasons par le composant de liaison (1), pour lequel le composant de liaison (1) est raccordé à l'extrémité de la ligne de transmission de signaux (15) éloignée de l'appareil de mesure par un transducteur à ultrasons (5) **caractérisé en ce qu'**à partir du temps de propagation saisi du signal électrique dans la ligne de transmission de signaux (15) et du temps de propagation observé qui se compose après la production du signal électrique, une différence est formée à partir des temps de passage à travers des composants électroniques, des temps de passage dans la ligne de transmission de signaux (15), des temps de passage t du chemin du son (6) après la conversion d'un signal électrique en un signal acoustique jusqu'à la reconversion du signal acoustique en un signal électrique, des temps de retour à travers la ligne de transmission de signaux (15) et à travers les composants électroniques jusqu'à la numérisation dans un enregistreur de transitoires (12) et lors de la formation de la différence, les écarts par rapport au point neutre de la base de temps utilisée lors de la mesure sont corrigés depuis le moment du signal d'excitation pour synchroniser le point neutre avec la base de temps utilisée, un organe de temps de propagation défini avec temps de propagation connu étant raccordé pour étalonnage et/ou réajustement ou correction d'une commande de séquence de temps dans l'appareil de mesure électronique (9) et/ou dans l'enregistreur de transitoires (12), temporairement de façon manuelle ou par le biais d'interrupteurs à commande électrique ou électronique, à l'extrémité de la ligne de transmission de signaux (15) ou est inséré de manière à pouvoir être commuté manuellement, électriquement ou électroniquement respectivement dans l'appareil de mesure électronique (9) avant la ligne de transmission de signaux (15) ou entre les parties de la ligne de transmission de signaux (15), l'organe de temps de propagation défini étant notamment une ligne de transmission de signaux définie avec temps de propagation connu.

2. Procédé selon la revendication 1 **caractérisé en ce que** la dépendance de fréquence du signal le temps de propagation mesurée pour le reflet depuis l'extrémité de la ligne de transmission de signaux (15) est déterminée par les caractéristiques de phase définies au moyen d'une transformée de Fourier rapide et pour lequel une correction de la caractéristique de phase a lieu par formation d'une différence pour au moins un signal d'ultrasons mesuré avec une transformée de Fourier, après quoi une retransformation peut être exécutée le cas échéant.

3. Procédé selon la revendication 1 **caractérisé en ce que** la dépendance de fréquence des amplitudes observées pour le signal réfléchi par l'extrémité éloignée de l'appareil de mesure de la ligne de transmission de signaux (15) est déterminée au moyen de la transformée de Fourier rapide et par rapport à la transformée de Fourier du signal d'émission qui est préalablement définie de manière numérique un affaiblissement ou un renforcement en fonction de la fréquence pour le signal de reflet est déterminé à partir de l'extrémité de la ligne de transmission de signaux (15), lequel est utilisé pour la correction de la dépendance de fréquence des amplitudes par normalisation pour au moins un des signaux d'ultrasons observés de la transformée de Fourier.

4. Procédé selon les revendications 2 et 3 **caractérisé en ce que** les étapes de procédé selon la revendication 2 et la revendication 3 sont utilisées en commun.

5. Procédé selon l'une quelconque des revendications précédentes **caractérisé en ce qu'**à partir de l'importance et/ou de la forme du signal électrique réfléchi à l'extrémité de la ligne de transmission de signaux (15), on crée un transducteur à ultrasons raccordé (5) et pour un transducteur à ultrasons non raccordé (5), une mesure de temps de propagation ou une mesure de phase en fonction de la fréquence et/ou une mesure d'amplitude en fonction de la fréquence des signaux électriques est effectuée pour la réflexion à l'extrémité de la ligne de transmission de signaux (15) éloignée de l'appareil de mesure.

6. Procédé selon l'une quelconque des revendications précédentes **caractérisé en ce qu'**à l'extrémité de la ligne de transmission de signaux (15) éloignée de l'appareil de mesure un interrupteur à commande manuelle, ou électrique, ou électronique peut être connecté avec lequel le transducteur à ultrasons (5) peut être désacouplé et il est possible de produire une connexion à valeur ohmique élevée (extrémité ouverte) ou une connexion à faible valeur ohmique (extrémité court-circuitée) ou une connexion avec une impédance définie.

7. Procédé selon les revendications 1 à 4 **caractérisé en ce qu'**à l'extrémité de la ligne de transmission de signaux (15) éloignée de l'appareil de mesure, des impédances réglables sont produites par des résistances pilotables de manière manuelle, électrique ou électronique ou par des composants à semi-conducteurs intégrés pilotables électroniquement.

8. Procédé selon l'une quelconque ou plusieurs des revendications précédentes **caractérisé en ce que** pour la production de signaux sur un générateur de signaux arbitraires (10), on utilise un signal, lequel comprend deux signaux ou parties de signal différents successifs, interrompus suffisamment longs pour éviter des superpositions de signaux, parmi lesquels un est choisi plus faible et/ou plus court pour la détermination des temps de propagation dans la ligne de transmission de signaux (15) et dans l'appareil de mesure électronique (9) et l'autre est sélectionné avec une amplitude plus grande et/ou persistant plus longtemps pour la détermination du temps de propagation de l'écho d'impulsion ultrasonique électrique (8) pour le chemin du son (6) dans la ligne de transmission de signaux (15) et dans l'appareil de mesure électronique (9).

9. Dispositif destiné à exécuter le procédé selon l'une quelconque ou plusieurs des revendications 1 à 8 comprenant un appareil de mesure à ultrasons électronique (9), un système de production de signaux, un système de saisie de signaux, un calculateur (14), une ligne de transmission de signaux (15), pour lequel l'appareil de mesure à ultrasons (9) est en liaison par le biais de la ligne de transmission de signaux (15) avec un composant de liaison (1) comportant un transducteur à ultrasons (5) et pour lequel le calculateur (14) est agencé pour exécuter le procédé selon l'une quelconque ou plusieurs des revendications 1 à 8 **caractérisé en ce qu'**une partie de la ligne de transmission de signaux (15) passe soit de manière interchangeable entre l'appareil de mesure à ultrasons électronique (9) et le transducteur à ultrasons (5), soit installé fixe entre ceux-ci, pour lequel la production de signaux a lieu avec un générateur de signaux arbitraires (10) et la détection de signaux avec un enregistreur de transitoires numérisant (12) et **en ce qu'**un organe de temps de propagation avec temps de propagation connu fonctionnant de manière analogique, pouvant être commuté manuellement, électriquement ou électroniquement est contenu dans l'appareil de mesure à ultrasons électronique (9) à la place d'une partie de la ligne de transmission de signaux (15).
